Europäisches Patentamt

European Patent Office

Office européen des brevets

(11) Numéro de publication: **0 281 715**
**B1**

(12) **FASCICULE DE BREVET EUROPEEN**

(45) Date de publication du fascicule du brevet:
30.05.90

(21) Numéro de dépôt: **87400552.3**

(22) Date de dépôt: **12.03.87**

(51) Int. Cl.⁵: **H02G 1/12**

(54) Perfectionnements aux machines à dénuder les conducteurs électriques.

(43) Date de publication de la demande:
**14.09.88 Bulletin 88/37**

(45) Mention de la délivrance du brevet:
**30.05.90 Bulletin 90/22**

(84) Etats contractants désignés:
**DE ES GB IT SE**

(56) Documents cités:
**FR-A- 2 491 690**
**US-A- 1 618 734**
**US-A- 4 084 310**

(73) Titulaire: **LABINAL Société anonyme dite:, 5, Avenue Newton, F-78190 Montigny le Bretonneux(FR)**

(72) Inventeur: **Leandris, Sergio, Chemin Départemental 20 Saint Sauveur, F-31150 Fenouillet(FR)**
Inventeur: **Moly, José, Chemin du Barray, F-31150 Gratentour(FR)**

(74) Mandataire: **Faber, Jean-Paul, CABINET FABER 35, rue de Berne, F-75008 Paris(FR)**

## Description

La présente invention se rapporte à une machine destinée à dénuder les conducteurs électriques, c'est-à-dire à couper la gaine isolante dans laquelle est inséré le conducteur, sans entamer celui-ci et à dégager une partie dudit conducteur correspondant au sectionnement de la gaine.

Dans la pratique, les conducteurs électriques comprennent une âme en matière conductrice de l'électricité, de préférence du cuivre et une gaine de matière plastique qui présente une certaine souplesse et une certaine élasticité. Pour dénuder un conducteur, on sectionne donc, la gaine, puis on exerce une poussée sur la partie sectionnée pour faire glisser celle-ci sur l'âme. Si on dénude une extrémité d'un conducteur, la partie de gaine découpée glisse vers l'extrémité libre, tandis que si on désire dénuder, dans une partie intermédiaire, un conducteur, on joue sur l'élasticité et la souplesse de la gaine.

La technique antérieure connaît notamment le brevet français n° 2 491 690 qui vise un outil à main pour dénuder les conducteurs électriques. Cet outil comprend une pince actionnée par des branches et dont les mors enserrent le conducteur à dénuder, entre les mors s'étendant des pincettes de découpage qui entaillent la gaine du conducteur et qui en fin de course des branches sont glissées pour obtenir la partie dénudée.

Une telle disposition présente les inconvénients suivants:

– la longueur de la partie dénudée est limitée;
– ce brevet vise une pince manuelle dont le rendement est incompatible avec les besoins industriels;
– après chaque action de la pince, il faut relâcher les branches pour dégager le conducteur ce qui est long.

On connaît, également, par le brevet US 1 618 734 une pince à dénuder les conducteurs comprenant deux mors de serrage couplés avec deux mors de découpage, les mors de découpage étant reliés à une barrette montée basculante sur un axe perpendiculaire à l'axe d'articulation des branches de la pince.

Une telle pince, comme celle objet du brevet français 2 491 690 ne peut être utilisée industriellement car elle ne constitue qu'un simple instrument à main utilisable par les électriciens.

La présente invention vise une machine à dénuder les conducteurs électriques et destinée à permettre la réalisation de faisceaux de câblage, cette machine permettant une grande cadence de production.

La machine, selon l'invention est du type comprenant un châssis supportant une pince de serrage avec deux branches montées basculantes sur le châssis et comportant des mors pour enserrer le conducteur à dénuder, des moyens pour commander la fermeture de la pince pour enserrer ledit conducteur, une pince de découpage de la gaine isolante avec des couteaux pour pratiquer dans celle-ci des entailles, ladite pince de découpage présentant deux branches couplées chacune à une branche correspondante de la pince de serrage de manière que les couteaux soient rapprochés à une valeur correspondant à celle des mors de la pince de serrage afin que le conducteur soit enserré puis la gaine découpée, ladite pince de découpage étant montée basculante sur un axe s'étendant dans une direction perpendiculaire à l'articulation des branches des pinces de serrage et de découpage et des moyens étant prévus pour commander le basculement de la pince de découpage après que les mors aient été rapprochés pour enserrer le conducteur et que les couteaux aient entaillé la gaine afin de déplacer ou de déformer ladite gaine et ainsi obtenir une partie dénudée et est caractérisée en ce que la pince de serrage étant agencée pour enserrer le conducteur à pression constante quelle que soit sa section et en ce qu'elle comprend un vérin dont la tige du piston comporte une came destinée à coopérer avec des galets prévus sur des prolongements des branches de la pince de serrage pour commander la fermeture de cette dernière contre l'action de moyens élastiques tendant à ouvrir ladite pince de serrage, ladite came étant terminée par un abrupt afin qu'en fin de course de la tige du piston du vérin les pinces de serrage et de découpage s'ouvrent brusquement sous l'action des moyens élastiques.

Grâce à une telle disposition, le conducteur dénudé peut être immédiatement retiré alors qu'un nouveau conducteur à dénuder peut être amené.

Suivant un détail constructif, les galets destinés à coopérer avec la came prévue sur la tige du piston du vérin sont montés escamotables afin que dans la course de retour de la tige du vérin ils s'effacent. Ainsi pendant la course de retour du vérin les pinces restent ouvertes ce qui permet de faciliter le retrait du conducteur dénudé et l'amenée du nouveau conducteur à dénuder.

Suivant encore une autre caractéristique constructive, la tige du piston du vérin comporte une seconde came tandis que la platine est pourvue d'un galet destiné à coopérer avec la came, la position de cette came sur la tige du piston du vérin étant telle qu'elle commande le basculement de platine après que le conducteur ait été serré par la pince de serrage et la gaine entaillée par les couteaux de la pince de découpage. On réalise ainsi à partir d'un seul vérin, d'une part, le serrage du conducteur et l'entaillage de la gaine et, d'autre part, l'opération par laquelle le conducteur est dénudé.

Afin de pouvoir modifier la longueur de la partie dénudée, la machine comporte des moyens pour modifier la position de la came de commande du basculement de la platine.

Suivant une caractéristique constructive, la came de commande de basculement de la platine est constituée par une plaquette montée pivotante par une extrémité contre l'action d'un ressort l'appliquant contre une butée formée par un six pans monté pivotant sur la tige du piston du vérin et dont chaque pan a une distance par rapport à l'axe de pivotement différente de celle des autres pans.

Pour permettre un réglage au moment de la mise en service de la machine ou lors des changements des couteaux, ladite machine comporte des moyens pour régler la position de l'un des mors au moins sur la branche correspondante de la pince de serrage.

Enfin, suivant une dernière caractéristique l'une des branches de la pince de serrage comporte un levier coudé articulé sur un axe et présentant deux ailes, l'une des ailes, sur une face, portant le mors tandis que l'autre face coopère avec une butée formée par un six pans excentré tournant sur un axe, sous l'action d'un ressort portant contre l'autre aile.

L'invention va maintenant être décrite avec plus de détails en se référant à un mode de réalisation particulier donné à titre d'exemple seulement et représenté aux dessins annexés, dans lesquels:

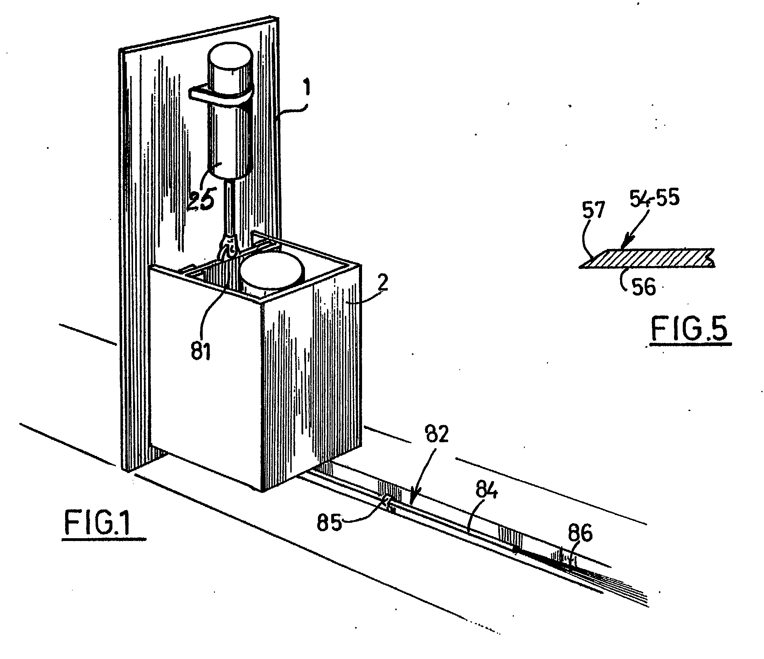

Figure 1 est une vue en perspective schématique de la machine.

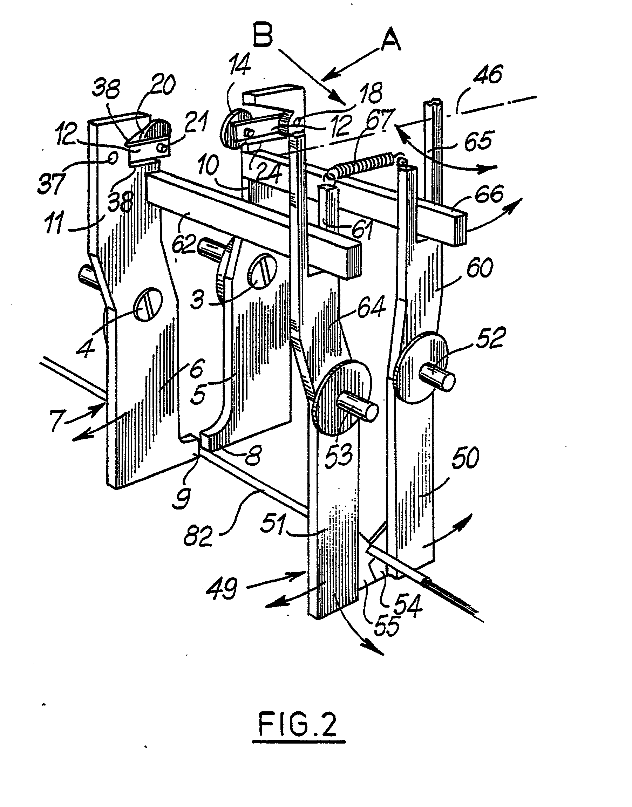

Figure 2 est une vue schématique en perspective de l'ensemble des pinces.

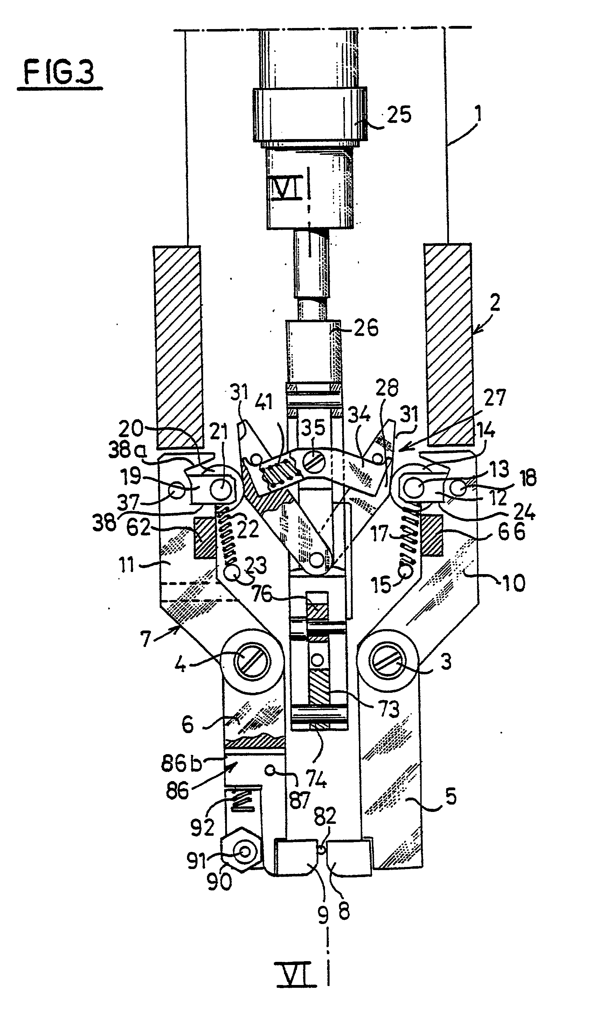

Figure 3 est une vue détaillée partiellement en coupe suivant la flèche A de la figure 2.

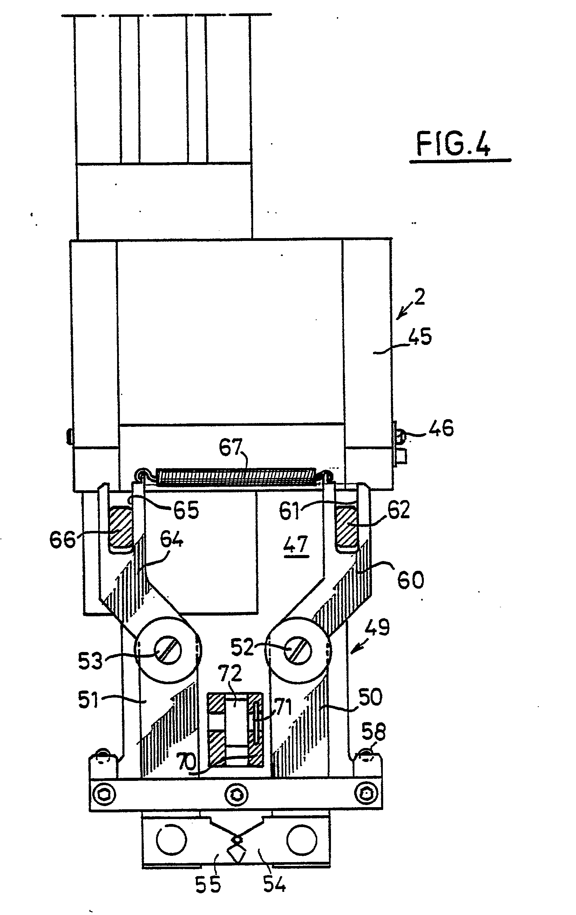

Figure 4 est une vue détaillée partiellement en coupe suivant la flèche B de la figure 2.

Figure 5 est une vue en coupe, à plus grande échelle d'un couteau.

Figure 6 est une vue en coupe suivant la ligne VI–VI de la figure 3.

Figure 7 est une vue en perspective d'un détail des cames de commande du rapprochement des pinces de serrage.

Figure 8 montre un détail du fonctionnement de la machine.

La machine représentée aux figures comprend un châssis fixe 1, le long duquel, verticalement est mobile un bâti 2, ce dernier étant commandé par un vérin 25.

Sur le bâti 2 sont articulées sur des axes 3 et 4 respectivement les branches 5 et 6 d'une pince 7 de serrage de la gaine. Cette pince 7 comporte deux mors 8 et 9 et deux prolongements 10 et 11. Le prolongement 10 est pourvu d'une barrette particulée sur un axe 18 entre deux butées 24, 24a et qui supporte un axe 13 sur lequel tourne un galet 14.

Sur un téton 15 solidaire du châssis 1 est accrochée l'une des extrémités d'un ressort de traction 17 dont l'autre extrémité est accrochée à la chape et qui tend à amener la branche 5 de la pince 7 dans la position écartée.

Le prolongement 11 est agencé de la même manière que le prolongement 10 avec une barrette 19, articulée sur 6 un axe 37, un galet 20 monté sur un axe 21 et un ressort de traction 22 inséré entre ladite barrette 19 et un téton 23. La barrette 19 peut basculer entre deux butées 38, 38a.

Le vérin 25 comporte une tige du piston 26 supportant une came 27.

La came 27 comprend deux leviers 28 et 29 articulés sur un axe 30 et présentant chacun une rampe 31. Sur la tige 26 est fixée, par une vis 35, une pièce d'arrêt 34 qui comporte des crochets 33 avec lesquels coopèrent des tétons 36 prévus sur les leviers respectivement 28 et 29. Entre la vis 35 et les leviers 28 et 29 sont interposés des ressorts de compression 40 et 41 qui tendent à maintenir les tétons 36 contre lesdits crochets 33.

On conçoit que lorsque la tige 26 sera déplacée vers le bas que les rampes 31 viendront rencontrer les galets 14 et 20 et que ces rampes tendront, ainsi, à faire basculer les branches 5 et 6 contre l'action des ressorts 17, 22 afin de rapprocher les mors 8 et 9.

Grâce aux ressorts 40 et 41 si les mors 8 et 9 doivent enserrer un conducteur ayant une large section les leviers 28 et 29 s'effaceront élastiquement. Ainsi on peut obtenir un serrage constant quelle que soit la section du conducteur.

Le bâti 2 comporte deux faces 45 entre lesquelles s'articule sur un axe 46 une platine 47 qui porte une pince de découpage 49 de la gaine du conducteur.

La pince 49 comporte deux branches 50 et 51 montées basculantes sur des axes 52 et 53 et portant chacune un couteau respectivement 54 et 55. Chaque couteau comporte une partie tranchante en forme de V à fond arrondi, l'une des faces 57 des couteaux étant en biseau, tandis que l'autre face 56 est droite.

La platine 47 est poussée par un ressort 58 contre une butée 59 qui correspond à une position de référence à partir de laquelle la gaine du conducteur doit être entaillée.

La branche 50 comporte un prolongement 60 qui est terminée par une fourchette 61 entre les doigts de laquelle s'insère une barrette 62 solidaire du prolongement 11.

La branche 51 comporte un prolongement 64 dont l'extrémité libre est terminée par une fourchette 65 entre les doigts de laquelle s'étend une barrette 66 solidaire du prolongement 10. Les fourchettes 61 et 65 sont reliées par un ressort de traction 67 qui tend à écarter les branches 50 et 51 et simultanément les branches 5 et 6 puisque les deux pinces 11 et 49 sont liées dans leurs mouvements.

Les axes 4 et 52, sont coaxiaux, les axes 3 et 53 étant également coaxiaux.

La platine 47 porte une chape 70 dont l'axe 71 supporte un galet 72 destiné à coopérer avec une came 80 montée à l'extrémité libre de la tige 26 du vérin 25.

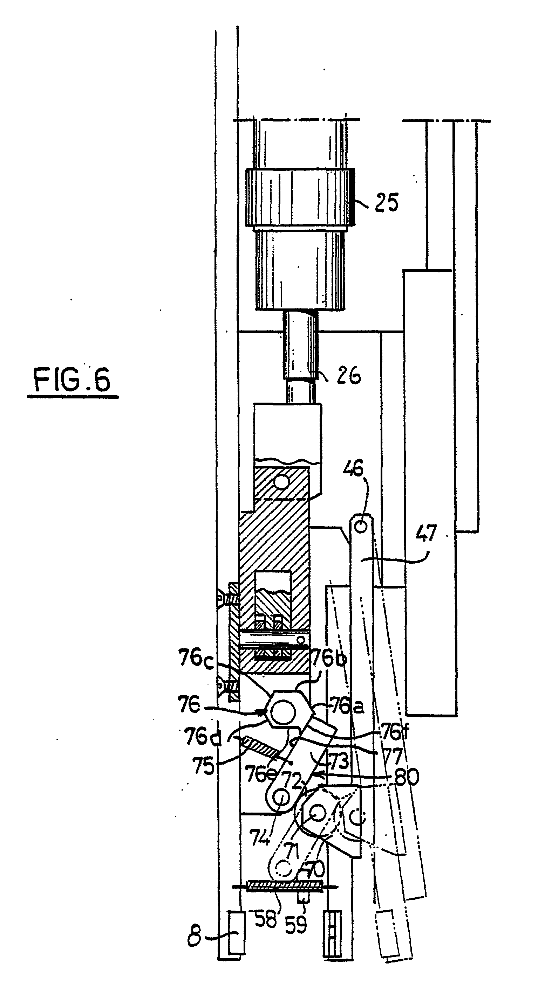

La came 80 est constituée par une plaquette 73 montée basculante sur un axe 74 et dont une face est appliquée par l'action d'un ressort 75 sur une butée 76. La butée 76 présente six faces 76a, 76b, 76c, 76d, 76e et 76f, ces faces étant à des distances différentes les unes des autres par rapport à un axe 79 autour duquel peut tourner la butée 76. On peut ainsi régler la position angulaire de la came 80 de manière que la platine 47 pivote plus ou moins lors de la descente de la tige 26 du piston du vérin 25. Dans la position représentée à la figure 6 le basculement de la platine 47 aura l'amplitude la plus importante, tandis que si la face 77 de la plaquette 73 porte contre la face 76e le pivotement de la platine 47 sera de la plus petite valeur angulaire. Le basculement de la platine 47 correspond à la longueur de dénudage du conducteur.

Le bâti 2 est guidé dans des glissières 81 du châssis et le conducteur qui porte la référence 82 comprend une âme 83 et une gaine isolante 84. Le conducteur 82 est amené par tous moyens appropriés sous la machine, par exemple manuellement et fixé par des pinces 85 sur une table 86.

L'un des mors, au moins, par exemple le mors 9 est porté par un levier coudé 86 articulé sur un axe 87. L'une des ailes 86a porte contre une butée 90 formée par un six pans excentré sur un axe 91, tandis qu'entre l'aile 86b et la branche 6 est inséré un ressort de compression 92 qui tend à maintenir le levier contre la butée. Une telle disposition permet de régler la position du mors 9 en faisant tourner la butée 90 afin de régler l'écartement initial des mors 8 et 9 en fonction des couteaux 54–55, ou lors du changement de ceux-ci.

Le fonctionnement de la machine est le suivant:

Le bâti 2 est descendu grâce à l'action du vérin 25, de manière que les mors 8 et 9 et les couteaux 54 et 55 viennent se situer de part et d'autre du conducteur 82. La tige du vérin 25 est ensuite descendue et durant une première partie de sa course les rampes 31 viennent rencontrer les galets 14 et 20, de sorte que les branches 5 et 6 sont basculées autour des axes 3 et 4 contre l'action du ressort 67, la gaine 84 étant ainsi enserrée entre lesdits mors. Simultanément les branches 50 et 51 sont rapprochées et pivotent de manière que la gaine 84 soit coupée par les couteaux 54 et 55. Cette action d'entaillage de la gaine 84 est commandée par les barrettes 62 et 66 qui sont solidaires des prolongements 11 et 10 respectivement et qui coopèrent, la première, avec la fourchette 61 et la seconde avec la fourchette 65.

Le basculement des branches 5 et 6 pour le serrage du conducteur 82 est limité par la section du conducteur, puisque les leviers 28 et 29 qui constituent la came 27 de commande de la pince 7 sont montés basculants contre l'action des ressorts 40 et 41 et qu'après un certain degré de serrage qui est fonction du tarage desdits ressorts lesdits leviers 28 et 29 s'effacent.

Comme le serrage des branches 50 et 51 qui portent les couteaux 54 et 55 est directement lié au serrage des mors 8 et 9, lesdits couteaux 54 et 55 pratiqueront une entaille dans la gaine 84 qui correspond à l'épaisseur de celle-ci quelle que soit la section du conducteur. On conçoit qu'une telle disposition est particulièrement avantageuse, car elle évite d'avoir à changer les outils en fonction des diamètres de conducteurs tout en étant assuré que l'âme 83 ne sera pas entaillée.

La tige 26 du vérin 25 continue à descendre et la came 80 vient rencontrer le galet 72, de sorte que la platine 47 bascule dans le sens de la flèche f autour de l'axe 46, contre l'action du ressort 58. On remarquera que les rampes 31 ont une longueur importante, de sorte que durant tout le mouvement de descente de la tige 26 les mors 8 et 9 enserrent le conducteur 82, les couteaux 54 et 55 étant maintenus dans la position rapprochée correspondante.

Durant le pivotement de la platine 47 la gaine 84, à partir de son entaille est chassée par les couteaux 54 et 55 pour dénuder une longueur correspondante du conducteur 82.

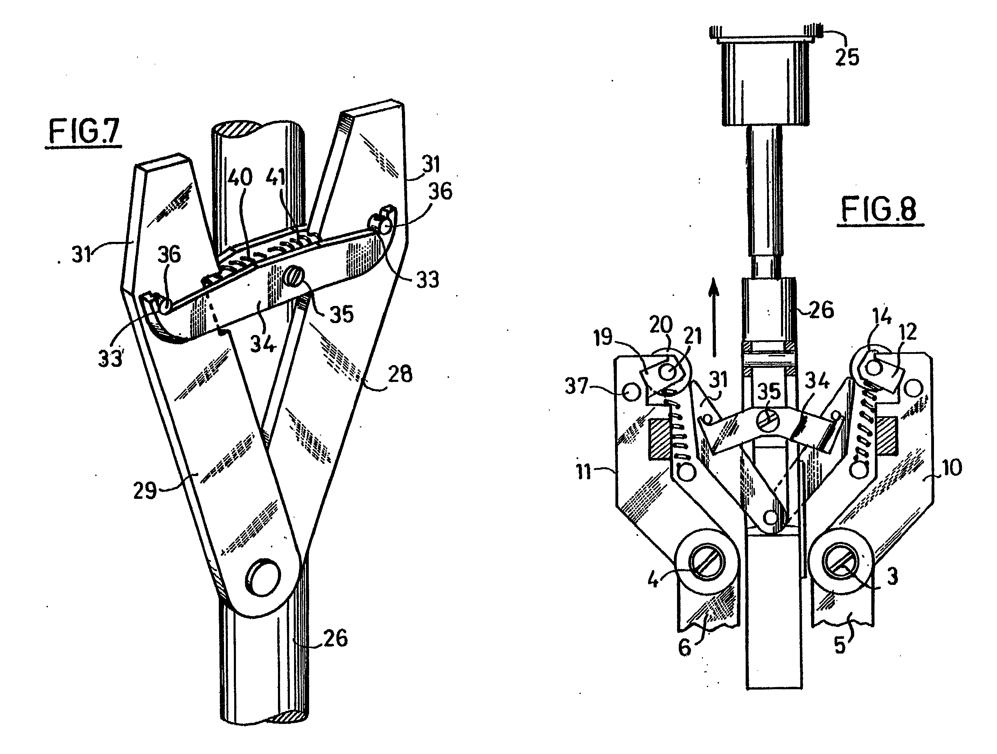

La tige 26, continue à descendre jusqu'à ce que les galets 14 et 20 échappent les extrémités supérieures des rampes 31 qui forment un abrupt de sorte qu'immédiatement et simultanément les branches 5 et 6 de la pince de serrage 7 et les branches 50 et 51 de la pince de découpage 49 s'écartent (voir figure 8) sous l'action du ressort 67.

Lors du retour de la tige 26 dans sa position initiale, les barrettes 12 et 19 s'effaceront élastiquement contre l'action des ressorts 17 et 22 pour venir porter contre les butées 24a et 38a.

On peut modifier la longueur de la partie dénudée en fonction de la position angulaire de la butée 76.

Grâce à la came 90 on peut procéder à un réglage de la position du mors 9 afin que le serrage de la pince 7 corresponde exactement à l'entaillage de la gaine 84 sans que l'âme 86 du conducteur risque d'être coupé. Ce réglage se fait, au moment de la mise en service de la machine ou après un changement des couteaux 54 et 55 lorsque ce changement s'avère nécessaire.

## Revendications

1. Machine pour dénuder des conducteurs électriques (82) formée d'une âme conductrice (86) logée dans une gaine isolante (84) et du type comprenant un châssis (1) supportant une pince de serrage (7) avec deux branches (5, 6) montées basculantes sur le châssis (1) et comportant des mors (8, 9) pour enserrer le conducteur (82) à dénuder, des moyens pour commander la fermeture de la pince (7) pour enserrer ledit conducteur (82), une pince de découpage (49) de la gaine isolante (84) avec des couteaux (54, 55) pour pratiquer dans celle-ci des entailles, ladite pince de découpage (49) présentant deux branches (50 et 51) couplées chacune à une branche correspondante de la pince de serrage (7) de manière que les couteaux (54, 55) soient rapprochés à une valeur correspondant à celle des mors de la pince de serrage (7) afin que le conducteur (82) soit enserré puis la gaine (84) découpée, ladite pince de découpage (49) étant monté basculante sur un axe (46) s'étendant dans une direction perpendiculaire à l'articulation des branches des pinces de serrage et de découpage et des moyens étant prévus pour commander le basculement de la pince de découpage (47) après que les mors (8, 9) aient été rapprochés pour enserrer le conducteur (82) et que les couteaux aient entaillé la gaine (84) afin de déplacer ou de déformer ladite gaine (84) et ainsi obtenir une partie dénudée caractérisée en ce que la pince de serrage (7) est agencée pour enserrer le conducteur (82) à pression constante quelle que soit sa section et en ce qu'elle comprend un vérin (25) dont la tige du piston comporte une came (27) destinée à coopérer avec des galets (14, 20) prévus sur des prolongements (10, 11) des branches de la pince de serrage (7) pour commander la fermeture de cette dernière contre l'action de moyens élastiques (67) tendant à ouvrir ladite pince de serrage (7), ladite came (27) étant terminée par un abrupt afin qu'en fin de course de la tige (26) du piston du vérin (25) les pinces de serrage (7) et de découpage (49) s'ouvrent brusquement sous l'action des moyens élastiques (67).

2. Machine pour dénuder des conducteurs électriques, selon la revendication 1, caractérisée en ce que les galets (14, 20) destinés à coopérer avec la came (27) prévue sur la tige (26) du piston du vérin (25) sont montés escamotables afin que dans la course de retour de la tige (26) du vérin (25) ils s'effacent.

3. Machine pour dénuder des conducteurs électriques, selon la revendication 1, caractérisée en ce que la tige (26) du piston du vérin (25) comporte une seconde came (80) tandis que la platine (47) est pourvue d'un galet (72) destiné à coopérer avec la came, la position de cette came sur la tige (26) du piston du vérin (25) étant telle qu'elle commande le basculement de la platine (47) après que le conducteur ait été serré par la pince de serrage (7) et la gaine entaillée par les couteaux de la pince de découpage (49).

4. Machine pour dénuder des conducteurs électriques, selon la revendication 3, caractérisée en ce qu'elle comporte des moyens pour modifier la position de la came (80) de commande du basculement de la platine (47), lesdits moyens étant constitués par une plaquette (73) montée pivotante par une extrémité contre l'action d'un ressort (75) l'appliquant contre une butée (76) formée par un six pans monté pivotant sur la tige (26) du piston du vérin (25) et dont chaque pan (76a, 76b) a une distance par rapport à l'axe de pivotement (79) différente de celle des autres pans (76c, 76d) .

5. Machine pour dénuder des conducteurs électriques, selon la revendication 1, caractérisée en ce qu'elle comporte des moyens (90, 91) pour régler la position de l'un des mors (9) au moins sur la branche correspondante (6) de la pince de serrage (7).

6. Machine pour dénuder des conducteurs électriques, selon la revendication 5, caractérisée en ce que l'une des branches (6) de la pince de serrage (7) comporte un levier coudé (86) articulé sur un axe (87) et présentant deux ailes (86a, 86b), l'une des ailes (86a), sur une face, portant le mors (9) tandis que l'autre face coopère avec une butée formée par un six pans excentré (90) tournant sur un axe (91), sous l'action d'un ressort (92) portant contre l'autre aile (86b).

## Claims

1. Machine for stripping electric conductors (82) formed of a conducting core (86) arranged in an insulating sheath (84) and of the type comprising a chassis or frame (1) supporting a gripping pincer device or pliers (7) with two arms (5, 6) mounted for rocking movement on the chassis (1) and comprising jaws (8, 9) for gripping the conductor (82) to be stripped, means for controlling the closure of the gripping pliers (7) for gripping the said conductor (82), nipping pincers (49) for cutting or nipping the insulating sheath (84) and having cutters (54, 55) for forming grooves or notches in said sheath, the said nipping pincers (49) having two arms (50 and 51) which are each coupled with a corresponding arm of the gripping pincers (7) in such manner that the cutters (54, 55) are brought to a value corresponding to that of the jaws of the gripping pincers (7), in order that the conductor (82) is gripped and then the sheath (84) is cut, the said nipping pincers (49) being mounted for rocking movement on a shaft (46) extending in a direction perpendicular to the pivot point of the arms of the gripping and nipping pincers and means being provided for controlling the rocking movement of the nipping pincers (47) after the jaws (8, 9) have been closed for gripping the conductor (82) and the cutters have scored the sheath (84) in order to displace or deform the said sheath (84) and thereby to obtain a stripped portion, characterised in that the gripping pincers (7) are arranged to enclose or squeeze the conductor (82) at constant pressure, whatever may be its section, and in that it comprises a jack (25), of which the piston rod comprises a cam (27) designed for cooperating with rollers (14, 20) provided on extensions (10, 11) of the arms of the gripping pincers (7) for controlling the closure of these latter against the action of resilient means (67) tending to open the said gripping pincers (7), the said cam (27) ending in a sheer surface, so that, on completion of the travel of the piston rod (26) of the jack (25), the gripping pincers (7) and cutting pincers (49) are opened suddenly under the action of resilient means (67).

2. Machine for stripping electric conductors, according to claim 1, characterised in that the rollers (14, 20) adapted to cooperate with the cam (27) provided on the piston rod (26) of the jack (25) are mounted to be retractable, in order that they are out of the way during the return travel of the rod (26) of the jack (25).

3. Machine for stripping electric conductors according to claim 1, characterised in that the piston rod (26) of the jack (25) comprises a second cam (80), while the platen or stage (47) is provided with a roller (72) intended for cooperating with the cam, the position of this cam on the piston rod (26) of the jack (25) being such that it controls the rocking movement of the platen (47) after the conductor has been gripped by the gripping pincers (7) and the sheath has been notched by the cutters of the nipping pincers (49).

4. Machine for stripping electric conductors according to claim 3, characterised in that it comprises means for modifying the position of the cam (80) controlling the rocking movement of the platen (47), the said means being formed by a thin plate (73) pivotally mounted by one end against the action of a spring (75) applying it against a stop (76) formed by a hexagon pivotally mounted on the rod (26) of the piston of the jack (25) and of which each face (76a, 76b) is at a distance from the pivot axis (79) which is different from that of the other faces (76c, 76d).

5. Machine for stripping electric conductors according to claim 1, characterised in that it comprises means (90, 91) for regulating the position of one of the jaws (9), at least on the corresponding arm (6) of the gripping pincers (7).

6. Machine for stripping electric conductors according to claim 5, characterised in that one of the arms (6) of the gripping pincers (7) comprises a cranked lever (86) pivoted on a shaft (87) and having two wings (86a, 86b), one of the wings (86a), on one face, carrying the jaws (9), while the other face cooperates with a stop formed by an eccentric hexagon (90) turning on a shaft (91), under the action of a spring (92) bearing against the other wing (86b).

## Patentansprüche

1. Maschine, die zum Abmanteln elektrischer Leiter (82) vorgesehen ist, die aus einer in einem isolierenden Mantel (84) eingebetteten, leitenden Seele (86) gebildet sind, mit einem Gestell (1), das eine Klemmzange (7) mit zwei Armen (5, 6), die schwenkbar an dem Gestell (1) angeordnet sind, sowie Backen (8, 9) aufweist, um den abzumantelnden Leiter (82) festzuklemmen, mit Mitteln, um das Schließen der Zange (7) für das Festklemmen des genannten Leiters (82) zu steuern, einer Schneidzange (49) für den isolierenden Mantel (84), die zwei Schneiden (54, 55) besitzt, um in diesem Einschnitte anzubringen, wobei die genannte Schneidzange (49) zwei Arme (50 und 51) aufweist, von denen jeder mit einem ihm zugeordneten Arm der Klemmzange (7) derart gekuppelt ist, daß die Schneiden (54, 55) entsprechend der Bewegung der Backen der Klemmzange (7) aufeinander zu bewegbar sind, damit der Leiter (82) festklemmbar und der Mantel (84) einschneidbar ist, wobei die genannte Schneidzange (49) um eine Achse (46) schwenkbar angeordnet ist, die sich in einer Richtung erstreckt, die zur Schwenkbewegung der Arme der Klemmzange und der Schneidzange senkrecht ist, und wobei Mittel vorgesehen sind, um die Schwenkbewegung der Schneidzange (49) zu steuern, damit der genannte Mantel (84) verschoben oder deformiert und auf diese Weise ein abgemantelter Bereich erhalten wird, nachdem die Backen (8, 9) aufeinander zu bewegt worden sind, um den Leiter (82) festzuklemmen und die Schneiden den Mantel (84) eingeschnitten haben, dadurch gekennzeichnet, daß die Klemmzange (7) für das Festklemmen des Leiters (82), unabhängig von dessen Querschnitt, einen konstanten Druck ausübt und daß sie einen Arbeitszylinder (25) aufweist, dessen Kolbenstange einen Nocken (27) besitzt, der mit Rollen (14, 20) zusammenwirkt, die an Verlängerungen (10, 11) der Arme der Klemmzange (7) vorgesehen sind, um das Schließen der letzteren gegen die Wirkung elastischer Mittel (67) zu steuern, die die genannte Klemmzange (7) zu öffnen suchen, wobei der genannte Nocken (27) an seinem Ende derart einen Absatz aufweist, daß am Ende des Arbeitsweges der Kolbenstange (26) des Arbeitszylinders (25) die Klemmzange (7) und die Schneidzange (49) sich abrupt unter der Einwirkung der elastischen Mittel (67) öffnen.

2. Maschine zum Abmanteln elektrischer Leiter nach Anspruch 1, dadurch gekennzeichnet, daß die Rollen (14, 20), die zum Zusammenwirken mit dem an der Kolbenstange (26) des Arbeitszylinders (25) vorgesehenen Nocken (27) vorgesehen sind, wegklappbar angeordnet sind, so daß sie bei der Rücklaufbewegung der Kolbenstange (26) des Arbeitszylinders (25) ausweichen.

3. Maschine zum Abmanteln elektrischer Leiter nach Anspruch 1, dadurch gekennzeichnet, daß die Kolbenstange (26) des Arbeitszylinders (25) einen zweiten Nocken (80) aufweist, wohingegen eine Platte (47) mit einer Rolle (72) versehen ist, die mit dem Nocken zusammenwirkt, wobei an der Kolbenstange (26) des Arbeitszylinders (25) der Nocken eine solche Lage hat, daß er das Verschwenken der Platte (47) steuert, nachdem der Leiter durch die Klemmzange (7) festgeklemmt worden ist und der Mantel durch die Schneiden der Schneidzange (49) eingeschnitten ist.

4. Maschine zum Abmanteln elektrischer Leiter nach Anspruch 3, dadurch gekennzeichnet, daß sie Mittel zur Veränderung der Lage des Nockens (80) für die Steuerung der Schwenkbewegung der Platte (47) aufweist, daß die genannten Mittel durch eine Platte (73) gebildet sind, die für eine Schwenkbewegung ihres einen Endes gegen die Einwirkung einer Feder (75) schwenkbar angeordnet ist, das sich gegen einen Anschlag (76) anlegt, der durch einen Sechskant gebildet ist, der schwenkbar an der Kolbenstange (26) des Arbeitszylinders (25) angeordnet ist und von dem jede Planfläche (76a, 76b) von der Schwenkachse (79) einen Abstand besitzt, der sich von demjenigen der übrigen Planflächen (76c, 76d) unterscheidet.

5. Maschine zum Abmanteln elektrischer Leiter nach Anspruch 1, dadurch gekennzeichnet, daß sie Mittel (90, 91) aufweist, um die Lage zumindest eines der Backen (9) an dem zugehörigen Arm (6) der Klemmzange (7) einzustellen.

6. Maschine zum Abmanteln elektrischer Leiter nach Anspruch 5, dadurch gekennzeichnet, daß der eine der Arme (6) der Klemmzange (7) einen Winkelhebel (86) aufweist, der um eine Achse (87) schwenkbar ist und zwei Hebelarme (86a, 86b) besitzt, von denen einer (86) an einer Seitenfläche die Backe (9) trägt, wohingegen die andere Seitenfläche mit einem Anschlag zusammenwirkt, der durch einen exzentrisch angeordneten Sechskant (90) gebildet ist, der um eine Achse (91) drehbar ist, wobei der Winkelhebel unter der Einwirkung einer Feder (92) steht, die sich gegen seinen anderen Hebelarm (86b) abstützt.

FIG.5

FIG.1

FIG.2

FIG.3

FIG.4

FIG.6

EP 0 281 715 B1

FIG.7

FIG.8

EP 0 281 715 B1